(19) Europäisches Patentamt
European Patent Office
Office européen des brevets

(11) Veröffentlichungsnummer: **0 015 430**
**A1**

(12) **EUROPÄISCHE PATENTANMELDUNG**

(21) Anmeldenummer: **80100799.8**

(22) Anmeldetag: **18.02.80**

(51) Int. Cl.³: **D 06 P 5/00**, D 06 P 1/20, B 41 M 5/02, C 09 D 11/02 // C09B1/54

(30) Priorität: **28.02.79 DE 2907724**

(43) Veröffentlichungstag der Anmeldung: **17.09.80 Patentblatt 80/19**

(84) Benannte Vertragsstaaten: **CH DE FR GB IT**

(71) Anmelder: **BAYER AG, Zentralbereich Patente, Marken und Lizenzen, D-5090 Leverkusen 1, Bayerwerk (DE)**

(72) Erfinder: **Kröck, Friedrich Wilhelm, Dr., Gerstenkamp 12, D-5000 Köln 80 (DE)**
Erfinder: **Neeff, Rütger, Dr., Berta-von-Suttner-Strasse 12, D-5090 Leverkusen (DE)**
Erfinder: **Kuth, Robert, Dr., Veit-Stoss-Strasse 12, D-5000 Köln 41 (DE)**

(54) **Transferdruckverfahren sowie Drucktinten und Hilfsträger zur Ausübung dieses Verfahrens.**

(57) Farbstoffe der Formel

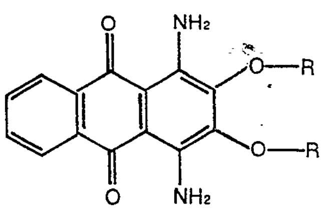

worin R für gegebenenfalls durch Fluor oder Chlor, Hydroxy oder Methoxy substituiertes $C_1$-$C_5$-Alkyl steht, eignen sich vorzüglich zum Bedrucken von polymeren Materialien nach dem Transferdruckprinzip, indem sie auf diesen Materialien, insbesondere Polyester- und Polyamidfasermaterialien, farbstarke Drucke ergeben.

EP 0 015 430 A1

BAD ORIGINAL

18.02.80

0015430



BAYER AKTIENGESELLSCHAFT
Zentralbereich
Patente, Marken und Lizenzen

5090 Leverkusen, Bayerwerk
(K)

# Transferdruckverfahren sowie Drucktinten und Hilfsträger zur Ausübung dieses Verfahrens

Die vorliegende Erfindung betrifft ein Verfahren zum Bedrucken von flächenförmigen Gebilden aus synthetischen oder teilsynthetischen polymeren Materialien nach dem Transferdruckprinzip, welches dadurch gekennzeichnet ist, daß man Farbstoffe der Formel

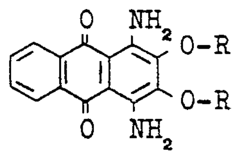

I

verwendet, worin

R für einen geradkettigen oder verzweigten Alkylrest mit 1 bis 5 Kohlenstoffatomen steht, der gegebenenfalls durch 1 bis 3 Fluor oder Chlor, Hydroxy- oder Methoxygruppen substituiert sein kann.

Ein weiterer Gegenstand der Erfindung sind Drucktinten bzw. Druckpasten für den Transferdruck, die mit diesen Farbstoffen bedruckten bzw. imprägnierten Hilfsträger sowie die Substrate, die mit diesen Farbstoffen nach dem Transferdruckprinzip gefärbt worden sind.

Geeignete Reste R sind beispielsweise: Methyl, Ethyl, Propyl, Isopropyl, Butyl, sek.-Butyl, tert.-Butyl, Pentyl, 2-Fluorethyl, 2,2,2-Trifluorethyl, 3-Chlor-propyl, 3-Fluor-propyl, 2-Hydroxy-ethyl, 2-Hydroxy-propyl, 3-Hydroxy-propyl, 4-Hydroxy-butyl, 2-Methoxy-ethyl, 2-Methoxy-propyl, 3-Methoxy-propyl, 4-Methoxy-butyl.

Bevorzugt zu verwendende Farbstoffe sind solche der Formel I, in der R für Methyl, Ethyl, Propyl oder Isopropyl steht.

Die erfindungsgemäß zu verwendenden Farbstoffe sind an sich bekannt (vgl. DRP 538 014), bzw. nach dem dort beschriebenen Verfahren herstellbar.

Auch das Transferdruckverfahren ist allgemein bekannt (vgl. z. B. Colour Index, 3. Ausgabe, Bd. 2, Seite 2480) und beispielsweise detailliert in den Französischen Patentschriften 1 223 330, 1 334 829 und 1 585 119) beschrieben. Dabei werden sogenannte Hilfsträger, auf die die Farbstoffe z. B. in Form sogenannter Drucktinten, wie sie z. B. in der Französischen Patentschrift 1 573 698 beschrieben wurden, oder als Pasten aufgebracht bzw. aufgedruckt sind, in einen engen Kontakt mit dem zu bedruckenden Substrat gebracht, worauf unter Wärme- und gegebenenfalls Druckeinwirkung der Farbstoff von dem Träger auf das Substrat transferiert wird.

Als Hilfsträger kommen flächenförmige Gebilde, wie Papier, Cellophan, Baumwollgewebe, Leinengewebe, Metallfolien usw. in Betracht (vgl. Britische Patentschrift 1 190 889 und Französische Patentschrift 1 575 069). Bevorzugt ist Papier.

Die Zusammensetzung der Drucktinten richtet sich nach der Art des Substrates, des Druckverfahrens, des Trägermaterials und anderem mehr. Im allgemeinen bestehen sie aus

- einem sublimierbaren Farbstoff, im vorliegenden Fall also einem Farbstoff der Formel I,
- einem Bindemittel,
- einem Lösungsmittel,
- gegebenenfalls Verdickungsmitteln,
- gegebenenfalls Füllstoffen und
- gegebenenfalls Dispergiermitteln.

Als Bindemittel kommen je nach dem Druckverfahren chemische und/oder physikalisch trocknende Produkte infrage, wie sie normalerweise im Textil- oder Papierdruck verwendet werden.

Als Lösungsmittel kommen geeignete organische Lösungsmittel oder Lösungsmittelgemische in Betracht. Die Drucktinten und Druckpasten können aber auch auf wäßriger Basis aufgebaut sein, stellen also Dispersionen der Farbstoffe in Wasser dar, welches außerdem übliche Dispergier- und Verdickungsmittel (vgl. Französische Patentschrift 1 223 330 sowie US-Patentschrift 3 647 503) enthält.

Als Verdickungsmittel kommen vor allem solche Produkte in Betracht, die bereits in geringer Konzentration eine deutliche Viskositätssteigerung bringen.

Als Dispergiermittel sind nichtionogene Verbindungen wie Alkylpolyglykolether und Alkylphenolpolyglykolether sowie anionenaktive Verbindungen, wie Naphthalinsulfonsäure-Formaldehyd-Kondensate, Ligninsulfonate und Sulfitablaugeprodukte geeignet. Die Art der Lösungsmittel hängt sehr stark von der Art des Druckverfahrens ab.

Die Druckfarben können nach den üblichen Druckverfahren (Hoch-, Tief-, Offset-, Film- oder Siebdruck) verdruckt werden.

Besonders geeignete Druckverfahren zur Herstellung von bedruckten Papierhilfsträgern sind der Tiefdruck und der Rotationsfilmdruck.

Eine Tiefdruckfarbe enthält im allgemeinen außer dem sublimierbaren Farbstoff ein im Tiefdruck übliches Bindemittel, d. h. physikalisch trocknende natürliche oder synthetische Hartharze, z. B. Celluloseether, und ein nicht zu hoch siedendes organisches Lösungsmittel, wie Ethanol oder Toluol.

Für den Rotationsfilmdruck dagegen werden vorzugsweise wäßrige Drucktinten verwendet, welche außer dem Farbstoff ein Bindemittel, einen Füllstoff, ein Verdickungsmittel sowie gegebenenfalls organische Lösungsmittel und/oder Dispergiermittel enthalten. Als Bindemittel kommen dabei vor allem wasserlösliche (bzw. durch übliche Verseifungsprozesse löslich gemachte) natürliche oder synthetische, physikalisch trocknende Produkte infrage, wie sie normalerweise zur Herstellung von Flexo- und Siebdruckfarben verwendet werden. Beispielsweise seien genannt: Schellak sowie Homo- und Copolymerisate auf der Grundlage von Vinylacetat, Vinylalkohol, Vinylchlorid, Acrylsäure , Acrylester und/oder Maleinsäure. Als Füllstoffe kommen Carbonate, Sulfate, Silicate, Oxide und dergleichen der Alkali- und Erdalkalimetalle sowie des Aluminiums und Titans in Betracht. Besonders bewährt haben sich feinteilige natürliche Calcium-Magnesiumcarbonate (Dolomit). Geeignete Verdickungsmittel sind Quelltone, Pflanzenkernmehlether sowie Alginate. Als Lösungsmittel können mit Wasser mischbare, geruchsarme, physiologisch unbedenkliche und verhältnismäßig hochsiedende Lösungsmittel wie Diacetonalkohol, Ethylglykol, Diethylenglykol, Glycerin und andere, sowie Mischungen dieser Lösungsmittel verwendet werden. Als Hilfsträger kommen hierbei insbesondere solche aus Papier mit hoher Saugfähigkeit (Cobbwert > 80) infrage.

Für den Transferdruck mit Farbstoffen der Formel I geeignete Substrate sind vorzugsweise flächenförmige Gebilde, wie Vliese, Filze, Pelze, Folien und vor allem Gewebe aus synthetischem oder teilsynthetischem Material, insbesondere solchem aus aromatischen Polyestern, Cellulosetriacetat, Superpolyamiden und Acrylnitrilpolymeren. Auch Gemische dieser hydrophoben synthetischen Fasern mit Natur- oder Regeneratfasern kommen in Betracht. Geeignet sind ferner partiell chemisch modifizierte Cellulosefasern (z. B. gemäß DT-OS 2 417 774) sowie mit Vernetzungsmitteln imprägnierte und vorgetrocknete Cellulosematerialien (z. B. gemäß DOS 2 502 590). Besonders bevorzugt ist der Umdruck auf Polyester und Cellulosetriacetat.

Nach dem beanspruchten Verfahren erhält man auf diesen Substraten klare blaustichig rote bis rubinfarbene Drucke mit guten Allgemeinechtheiten.

Ein besonderer Vorzug des Verfahrens besteht darin, daß die erfindungsgemäß zu verwendenden Farbstoffe die oben genannten Faserarten fast tongleich und kräftig färben.

Beispiel 1

A) 75 g des Farbstoffs der Formel

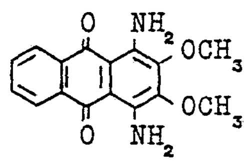

50 g eines anionischen Dispergiermittels, z. B. eines Ligninsulfonates oder eines Kondensationsproduktes aus Naphthalinsulfonsäure und Formaldehyd, und 100 ml Wasser werden vermischt und in einer Kugelmühle durch 10stündiges Mahlen in eine fein verteilte Form übergeführt.

B) Die nach A) erhaltene wäßrige Dispersion kann wie folgt zu einer Druckpaste verarbeitet werden.
50 - 200 g werden mit 400 g einer 10%igen Johannisbrotkernmehletherverdickung und 550 - 400 ml Wasser angeteigt.

C) Mit dieser Druckpaste wird ein Papier im Tiefdruckverfahren bedruckt. Verpresst man dieses Papier während 15 - 60 Sekunden bei 200 °C mit einem Textil aus Polyesterfasern, so erhält man einen farbkräftigen, brillanten, blaustichig roten Druck mit guten Echtheiten. Ein ähnlich farbkräftiger, brillant blaustichig roter Druck wird auch auf einem Textil aus Polyacrylnitril unter sonst gleichen Bedingungen erhalten.

Beispiel 2

A) 45 g des Farbstoffs der in Beispiel 1 angegebenen Formel werden mit 8 g eines Emulgatorgemisches aus ethoxyliertem Nonylphenyl (4 - 12 Mol Ethylenoxid) in Wasser angeteigt. Man setzt 10 g Ethylcellulose N4 (Hercules Powder) und

35 g eines Maleinatharzes zu, das durch Kondensation von Colophonium mit Maleinsäure hergestellt wurde. Man knetet bei 80 - 100 °C ca. 2 Stunden und mahlt anschließend auf einer der üblichen Mühlen. Man erhält ein feinkörniges Farbstoffpulver.

B) 200 g des nach A) erhaltenen Farbstoffpulvers gibt man unter Rühren in ein Gemisch aus 730 g Ethanol, 50 g Ethylenglykol und 20 g Ethylcellulose N22 (Hercules Powder).

C) Mit der so erhaltenen Druckfarbe kann man im Tiefdruck Papiere bedrucken. Von diesen bedruckten Papieren kann man im Transfer-Verfahren Textilien aus Cellulosetriacetat oder Polyamid, z. B. Gewirke, bedrucken und erhält kräftige blaustichig rote Drucke.

Beispiel 3

A) 100 g einer Farbstoffdispersion, hergestellt nach der Vorschrift des Beispiels 1A), werden mit 800 g Wasser und 100 g einer 5%igen Alginatverdickung innig vermischt. Mit dieser Farbstofflösung wird eine Gewebebahn aus Baumwolle auf einem Foulard getränkt und anschließend getrocknet.

B) Das nach A) erhaltene Baumwollgewebe eignet sich für den Transferdruck besonders auf voluminösen Materialien, wie z. B. Teppichen aus Polyesterfasern.

Beispiel 4

A) 75 g des Farbstoffes der in Beispiel 1 angegebenen Formel werden zusammen mit 50 g eines Kondensationsproduktes aus Naphthalinsulfonsäure und Formaldehyd und 100 g Wasser in einer Kugelmühle fein dispergiert. Die so erhaltene Farbstoffdispersion rührt man in eine Verdickung ein, bestehend aus

| | | |
|---|---|---|
| 21 | g | Wasser, |
| 7 | g | Diacetonalkohol, |
| 41,3 | g | Microdol(R) extra (natürliches Kalzium-Magnesium-carbonat), |
| 0,2 | g | Natriumhexametaphosphat, |
| 0,5 | g | Naphthalinsulfonsäure/Formaldehyd-Kondensationsprodukt, |
| 8 | g | Bentone(R) EW 3%ig (Quellton) und |
| 12 | g | Acrylatbinder DA (50%ige Lösung des Ammoniumsalzes eines Polyacrylates in 33%igem wäßrigem Ethylalkohol. Das Polyacrylat ist ein Copolymerisat aus 60 % Acrylsäureethylester, 25 % Metacrylsäureethylester und 15 % Acrylsäure). |

B) Diese Druckpaste druckt man mit Siebdruckschablonen oder mit Rundschablonen auf einen Zwischenträger, vorzugsweise Papier mit einem Quadratmetergewicht von ca. 60 - 80 g/cm² und einem $Cobb_{60}$Wert von etwa 80. Man erhält einen glatten Druck.

Mit dem so hergestellten Papier kann man Textilien aus Polyester, Polyamid, Polyacrylnitril und Cellulosetriacetat in der Form bedrucken, daß man das Textil mit dem Papier während 15 - 60 Sekunden in Kontakt bringt und auf Temperaturen von 190 - 200 °C erhitzt. Man erhält klare blaustichig rote Drucke auf den genannten Faserarten.

Beispiel 5

Mit einer Druckpaste wie in Beispiel 2 beschrieben, stellt man einen Druck auf Papier, Vlies-Material oder einem Baumwollnessel her. Wenn man diesen Druck mit Teppichmaterial aus Polyesterfasern während 30 Sekunden bei 200 °C verpreßt, erhält man einen klaren blaustichig roten Druck.

Beispiel 6

Man verwendet ein bedrucktes Papier wie in Beispiel 4 beschrieben und verpreßt dieses mit Decken, die aus Polyacrylnitrilmaterial hergestellt wurden. Man arbeitet dabei in einer Kammper unter vermindertem Druck zwischen 70 und 200 mm Hg-Säule. Man erhält einen Druck, bei dem der Farbstoff tief in das voluminöse Material eingedrungen ist.

Beispiel 7

Man verwendet Papiere, die gemäß Beispiel 2 hergestellt wurden und bedruckt damit Folien, die aus Polyester, Polyamid oder Polyacrylnitril hergestellt wurden. Man erhält transparente blaustichig rote Drucke.

Beispiel 8

Verwendet man anstelle der in Beispiel 7 beschriebenen Folien mit Kunststoff beschichtete Gewebe oder Vliese, so erhält man kräftige blaustichig rote Drucke, die die Eigenschaft haben, im Laufe der Zeit etwas zu verlaufen.

Beispiel 9

Man verwendet Papiere, die gemäß Beispiel 4 hergestellt wurden und bedruckt damit Gegenstände, die aus Schaumstoffen hergestellt wurden. Die Schaumstoffe können auf Basis von Polyester, Polyether oder Polystyrol hergestellt sein. Man erhält wiederum einen kräftigen blaustichig roten Druck.

Beispiel 10

Mit einer Druckpaste, wie sie in den Beispielen 1B), 2B) oder 4 beschrieben ist , stellt man einen Druck auf Papier, Vlies-Material oder einem Baumwollnessel her. Wenn man diesen Druck mit Teppichmaterial (Nadelfilz oder getuftetes Material) aus Polyamid 6 oder 66 während 30 Sekunden bei 200 °C verpreßt, erhält man einen brillanten blaustichig roten Druck, der sich neben guten Echtheiten dadurch auszeichnet, daß der Farbstoff tief in das textile Material eingedrungen ist.

Beispiel 11

Mit einer Klotzflotte, bestehend aus

| | | |
|---|---|---|
| 200 | g | der nachstehend beschriebenen Reaktivkomponente |
| 30 | g | N-Methylol-$\varepsilon$-caprolactam |
| 60 | g | Hexamethylolmelaminhexamethylether |
| 5 | g | Ammoniumsulfat |
| 705 | g | Wasser |

wird ein Gewebe aus Polyester-Baumwolle (50 : 50) imprägniert, auf ca. 70 % Naßaufnahme abgequetscht und während 3 Minuten bei 100 °C getrocknet.

Die so vorbereitete Ware wird mit einem Transferdruckpapier, das mit dem Farbstoff der in Beispiel 1 angegebenen Formel bedruckt ist, während 120 Sekunden bei 210 °C in Kontakt gebracht.

Man erhält einen rotvioletten Druck mit guten Gebrauchsechtheiten, insbesondere vergleichsweise guten Naß- und Reibechtheiten.

Die Reaktivkomponente wurde wie folgt bereitet:
283 g Stearinsäureamid wurden mit 324 g Diethylenglykolmonobutylether vermischt, auf 85 °C unter Rühren erhitzt und mit 125 g Formaldehydlösung (37%ig) während 15 Minuten zur Reaktion gebracht. Die Formaldehydlösung wurde zuvor mit Soda auf einen pH-Wert von 8 gestellt. Die Mischung wurde mit einer Lösung von 40 g Natriumdodecylbenzolsulfonat und 628 g Wasser versetzt und kalt gerührt.

Beispiele 12 - 32

Führt man die in den Beispielen 1 - 11 beschriebenen Druckverfahren statt mit dem in Beispiel 1 genannten Farbstoff mit einem der Farbstoffe der folgenden Tabelle durch, so erhält man sehr ähnliche blaustichig rote bis rubinfarbene Drucke mit guten Allgemeinechtheiten.

Tabelle

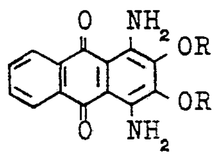

| Bsp.-Nr. | R | Farbton des Druckes auf Polyester |
|---|---|---|
| 12 | $-C_2H_5$ | blaustichig Rot |
| 13 | $-(CH_2)_2-CH_3$ | blaustichig Rot |
| 14 | $-CH(CH_3)_2$ | Rotviolett |
| 15 | $-(CH_2)_3-CH_3$ | blaustichig Rot |
| 16 | $-CH(CH_3)-C_2H_5$ | Rotviolett |
| 17 | $-CH_2-CH(CH_3)_2$ | blaustichig Rot |
| 18 | $-(CH_2)_4-CH_3$ | blaustichig Rot |
| 19 | $-(CH_2)_2-CH(CH_3)_2$ | blaustichig Rot |
| 20 | $-CH_2-C(CH_3)_3$ | blaustichig Rot |
| 21 | $-CH_2-CH_2-F$ | blaustichig Rot |
| 22 | $-CH_2-CF_3$ | blaustichig Rot |
| 23 | $-(CH_2)_3-Cl$ | blaustichig Rot |
| 24 | $-(CH_2)_3-F$ | blaustichig Rot |
| 25 | $-(CH_2)_2-OH$ | Rotviolett |
| 26 | $-CH_2-CH(OH)-CH_3$ | Rotviolett |
| 27 | $-(CH_2)_3-OH$ | blaustichig Rot |
| 28 | $-(CH_2)_4-OH$ | blaustichig Rot |
| 29 | $-CH_2-CH_2-OCH_3$ | Rotviolett |
| 30 | $-CH_2-CH(CH_3)-OCH_3$ | blaustichig Rot |
| 31 | $-(CH_2)_4-OCH_3$ | blaustichig Rot |
| 32 | $-CH_2-CH(OCH_3)-CH_2-OCH_3$ | Rotviolett |

Patentansprüche:

1. Verfahren zum Bedrucken von vorzugsweise synthetischen oder teilsynthetischen polymeren Materialien nach dem Transferdruckprinzip, dadurch gekennzeichnet, daß man Farbstoffe der Formel

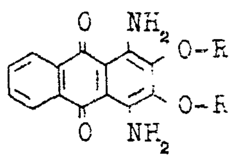

verwendet,
worin
R für einen geradkettigen oder verzweigten Alkylrest mit 1 bis 5 Kohlenstoffatomen steht, der gegebenenfalls durch 1 bis 3 Fluor oder Chlor, Hydroxy- oder Methoxygruppen substituiert sein kann.

2. Verfahren gemäß Anspruch 1, dadurch gekennzeichnet, daß man Farbstoffe der angegebenen Formel verwendet, in der R für einen geradkettigen oder verzweigten Alkylrest mit 1 bis 3 Kohlenstoffatomen steht, der gegebenenfalls durch 1 bis 3 Fluor oder Chlor, oder eine Hydroxy- oder Methoxygruppe substituiert sein kann.

3. Verfahren gemäß den Ansprüchen 1 und 2, dadurch gekennzeichnet, daß man Farbstoffe der angegebenen Formel verwendet, in der R für einen geradkettigen oder verzweigten Alkylrest mit 1 bis 3 Kohlenstoffatomen steht, der gegebenenfalls durch 1 bis 3 Fluor substituiert sein kann.

4. Verfahren gemäß den Ansprüchen 1 bis 3, dadurch gekennzeichnet, daß man Farbstoffe der angegebenen Formel verwendet, in der R für Methyl, Ethyl, Propyl oder Isopropyl steht.

5. Verfahren gemäß den Ansprüchen 1 bis 4, dadurch gekennzeichnet, daß man den Farbstoff der angegebenen Formel verwendet, in der R für Ethyl steht.

6. Verfahren gemäß den Ansprüchen 1 bis 4, dadurch gekennzeichnet, daß man den Farbstoff der angegebenen Formel verwendet, in der R für Methyl steht.

7. Drucktinten und Druckpasten für den Transferdruck, dadurch gekennzeichnet, daß diese Farbstoffe der Ansprüche 1 bis 6 enthalten.

8. Hilfsträger für den Transferdruck, dadurch gekennzeichnet, daß diese mit Farbstoffen der Ansprüche 1 bis 6 bedruckt oder imprägniert sind.

9. Synthetische oder teilsynthetische polymere Materialien, dadurch gekennzeichnet, daß diese mit Farbstoffen der Ansprüche 1 bis 6 nach dem Transferdruckprinzip gefärbt oder bedruckt worden sind.

10. Polyesterfasermaterialien, dadurch gekennzeichnet, daß diese mit Farbstoffen der Ansprüche 1 bis 6 nach dem Transferdruckprinzip gefärbt oder bedruckt worden sind.

Europäisches Patentamt

# EUROPÄISCHER RECHERCHENBERICHT

0015430

Nummer der Anmeldung

EP 80 10 0799

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 431 026 (BAYER)<br>* Das ganze Dokument *<br>-- | 1,7-10 |
| A | DE - A - 2 832 265 (CIBA-GEIGY)<br>* Ansprüche 1-18; Seite 23, Beispiel 1; Formel 106 *<br>-- | 1,9,10 |
| A | GB - A - 1 403 619 (YORKSHIRE CHEMICALS)<br>* Ansprüche 1,2,4-20; Beispiele 1,9 *<br>-- | 1,7-10 |
| A | DE - A - 2 719 971 (SANDOZ)<br>* Das ganze Dokument *<br>-- | 1,9,10 |
| A | FR - A - 2 276 941 (BAYER)<br>* Das ganze Dokument *<br>-- | 1,7-10 |
| A | DE - A - 2 460 420 (BASF)<br>* Das ganze Dokument *<br>-- | 1 |
| DA | DE - C - 538 014 (I.G. FARBEN)<br>* Beispiel 4; Patentanspruch *<br>---- | 1-6 |

**KLASSIFIKATION DER ANMELDUNG (Int.Cl. 3)**

D 06 P 5/00
1/20
B 41 M 5/02
C 09 D 11/02 //
C 09 B 1/54

**RECHERCHIERTE SACHGEBIETE (Int. Cl. 3)**

D 06 P 5/00
1/20
B 41 M 5/02
C 09 D 11/02
C 09 B 1/54

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 13-06-1980 | DEKEIREL |